# EUROPEAN PATENT SPECIFICATION

(11) **EP 4 040 545 B1**
(45) Date of publication and mention of the grant of the patent: **03.09.2025**
(21) Application number: 20871107.7
(22) Date of filing: 01.07.2020
(51) Int. Cl.: H01M 4/64, H01M 4/66, H01M 10/04, B23K 11/14, B23K 11/11, B23K 11/18, B23K 33/00, B23K 101/38, B23K 103/12, B23K 103/16, H01M 4/04, H01M 50/536

(54) **METHOD FOR PRODUCING SECONDARY BATTERY, AND SECONDARY BATTERY**
VERFAHREN ZUR HERSTELLUNG EINER SEKUNDÄRBATTERIE UND SEKUNDÄRBATTERIE
PROCÉDÉ DE PRODUCTION DE BATTERIE SECONDAIRE, ET BATTERIE SECONDAIRE

(30) Priority: 30.09.2019 JP 2019179957
(43) Date of publication of application: 10.08.2022
(73) Proprietor: SANYO Electric Co., Ltd., Daito-shi Osaka 574-8534 (JP)
(72) Inventor: ARAI, Tomoharu, Osaka-shi, Osaka 540-6207 (JP); YOSHIDA, Shinichirou, Osaka-shi, Osaka 540-6207 (JP); OKADO, Tetsuya, Osaka-shi, Osaka 540-6207 (JP); MURAOKA, Masashi, Osaka-shi, Osaka 540-6207 (JP); MIYAZAKI, Atsushi, Osaka-shi, Osaka 540-6207 (JP)
(74) Representative: Vigand, Philippe
(86) International application number: PCT/JP2020/025842
(87) International publication number: WO 2021/065127

(56) References cited:
- EP-A1- 2 587 574
- WO-A1-2012/133329
- JP-A- 2005 259 511
- JP-A- 2013 196 959
- JP-A- 2015 039 713
- JP-A- 2018 174 075
- JP-B2- 5 917 407
- US-A1- 2018 272 456

## Description

### TECHNICAL FIELD

The present disclosure relates to a method for manufacturing a secondary battery and a secondary battery, and in particular to a method for manufacturing a secondary battery in which a negative electrode core and a negative electrode current collector are resistance-welded.

### BACKGROUND ART

There has been known a secondary battery in which a negative electrode constituting an electrode assembly is electrically connected through a negative electrode current collector to a negative electrode terminal on a sealing plate or the like. Typically, a copper foil is used as the core of the negative electrode, and the negative electrode current collector is welded to the copper foil. For example, Patent Literature 1 discloses a negative electrode core made of a copper foil having a dynamic friction coefficient of 0.5 or less between one surface and the other surface of the copper foil, with an oxide film and/or a rust-proof coating having a thickness of from 0.5 to 4 nm formed on a surface of the copper foil. By using such a negative electrode core, Patent Literature 1 has achieved the improved weldability with the negative electrode current collector. Improving the weldability with the negative electrode current collector has also been proposed by controlling the surface roughness, glossiness, and so on (see, for example, Patent Literature 2 and 3).

Another method for improving the weldability between the negative electrode core and the negative electrode current collector has been known, in which a protruding portion called a projection is formed on the surface of the negative electrode current collector contacting the negative electrode core (see, for example, Patent Literature 4). The projection enables concentration of the current at the tip of the projection during resistance-welding, reducing the reactive current and achieving efficient and excellent resistance-welding.

### CITATION LIST

### PATENT LITERATURE

PATENT LITERATURE 1: Japanese Unexamined Patent Application Publication No. 2012-99351
PATENT LITERATURE 2: Japanese Unexamined Patent Application Publication No. 2014-120399
PATENT LITERATURE 3: Japanese Unexamined Patent Application Publication No. 2018-174075
PATENT LITERATURE 4: Japanese Unexamined Patent Application Publication No. 2009-32640

### SUMMARY

There is a case where voids are generated at the welded portion between the negative electrode core and the negative electrode current collector. In particular, the possibility of generating the voids increases according to the increase of the number of layers of the negative electrode core to be welded to the negative electrode current collector. When the voids are generated, drawbacks such as unwelded portions or high resistance may occur at the welded portion. It is therefore desired to minimize the generation of the voids. With respect to the existing techniques disclosed in Patent Literature 1 to 4, there is still room for improvement in terms of suppressing the voids.

Accordingly, it is an object of the present disclosure to provide a method for securely welding a negative electrode core and a negative electrode current collector while minimizing the generation of voids at a welded portion of the core and the current collector.

A method for manufacturing a secondary battery according to an aspect of the present disclosure is a method for manufacturing a secondary battery including an electrode assembly and a negative electrode current collector, the electrode assembly including a positive electrode, a negative electrode, and a separator, and formed by stacking the positive electrode and the negative electrode with the separator interposed therebetween, the negative electrode including a negative electrode core made of a copper foil having a surface roughness of 2.0 µητ or less and a glossiness of from 50 to 350, and a negative electrode mixture layer formed on a surface of the negative electrode core except for an exposure region where a surface of the negative electrode core is exposed, the electrode assembly including a core stacked portion formed by stacking a plurality of the exposure regions of the negative electrode, the negative electrode current collector including a projection having a height of from 0.36 mm to 0.45 mm on at least one of a first member and a second member constituting the negative electrode current collector, the method for manufacturing the secondary battery includes resistance-welding the negative electrode current collector and the core stacked portion in a state where the core stacked portion is sandwiched between the first member and the second member from both sides, and the projection is in contact with the core stacked portion.

A secondary battery according to an aspect of the present disclosure is a secondary battery including an electrode assembly and a negative electrode current collector, the electrode assembly including a positive electrode, a negative electrode, and a separator, and formed by stacking the positive electrode and the negative electrode with the separator interposed therebetween, in which the negative electrode includes a negative electrode core made of a copper foil having a surface roughness of 2.0 µm or less and a glossiness of from 50 to 350, and a negative electrode mixture layer formed on a surface of the negative electrode core except for an exposure region where a surface of the negative electrode core is exposed, the electrode assembly includes a core stacked portion formed by stacking a plurality of the exposure regions of the negative electrode, the core stacked portion is sandwiched between a first member and a second member, which constitute the negative electrode current collector, from both sides, and welded with the first member and the second member to obtain a nugget formed by the welding, and no void having a length of at least 1.0 mm is present at an interface between the core stacked portion and the negative electrode current collector, while a maximum diameter of the nugget is at least 1.6 mm.

In the method for manufacturing the secondary battery according to the present disclosure, it is possible to minimize the generation of the voids at the welded portion of the negative electrode core and the negative electrode current collector, enabling secure welding of the core and the current collector. The secondary battery according to the present disclosure achieves a high strength and low resistance welded portion between the negative electrode core and the negative electrode current collector.

### BRIEF DESCRIPTION OF DRAWINGS

FIG. 1 is a perspective view illustrating an appearance of a secondary battery of an example of an embodiment.
FIG. 2 is a perspective view of an electrode assembly and a sealing plate of the example of the embodiment.
FIG. 3 is a sectional view of a welded portion between a negative electrode core and a negative electrode current collector of the example of the embodiment.
FIG. 4 illustrates a welding process of the negative electrode core and the negative electrode current collector in the example of the embodiment.
FIG. 5 is a front view of a second member constituting the negative electrode current collector in the example of the embodiment.
FIG. 6 is a sectional view taken along line A-A of FIG. 5.
FIG. 7 is a sectional view of a welded portion of a negative electrode core and a negative electrode current collector of a comparative example.

### DESCRIPTION OF EMBODIMENTS

An example of an embodiment of the present disclosure will be described in detail below. The drawings referred to in the description of the embodiment are schematically illustrated, and the dimensional proportions and the like of the components drawn in the drawings may differ from the actual components. Specific dimensional ratios and the like should be determined by referring to the following description. In the specification, the phrase "from numerical value A to numerical value B" means "numerical value A or higher and numerical value B or lower," unless otherwise specified.

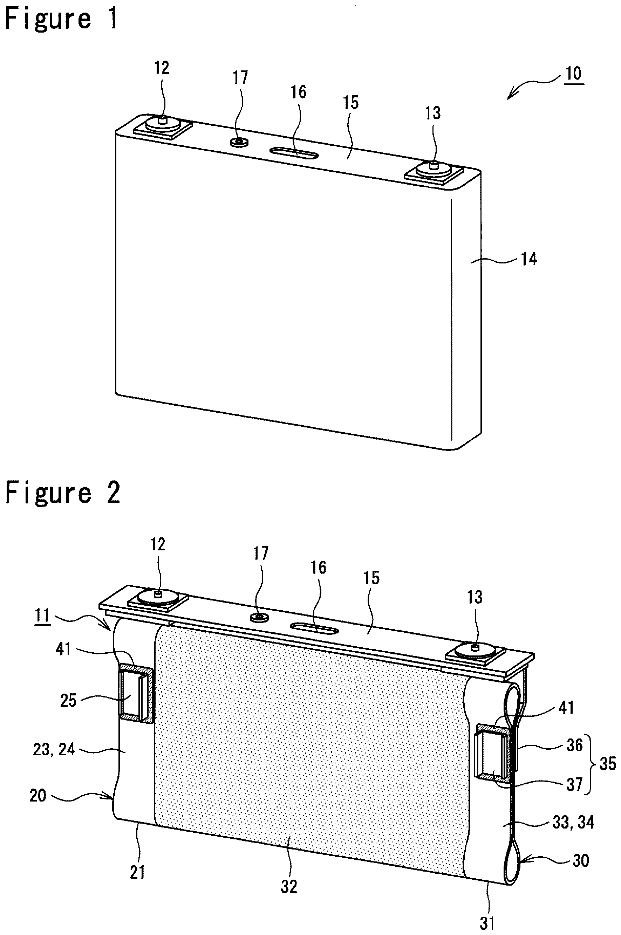

FIG. 1 is a perspective view illustrating an appearance of a secondary battery 10 of an example of an embodiment. FIG. 2 is a perspective view of an electrode assembly 11 and a sealing plate 15 constituting the secondary battery 10 of the example of the embodiment. The secondary battery 10 illustrated in FIG. 1 is a rectangular battery with a rectangular outer can 14. The outer body of the battery may not be the outer can 14 and may be made of, for example, a laminate sheet including a metal layer and a resin layer, or may be a cylindrical outer can.

As illustrated in FIGS. 1 and 2, the secondary battery 10 includes the electrode assembly 11, an electrolyte, and the rectangular outer can 14 housing the electrode assembly 11 and the electrolyte. The outer can 14 is a flat rectangular metal container with an opening. The electrode assembly 11 is a wound electrode assembly in which a positive electrode 20 and a negative electrode 30 are wound spirally through a separator 32 and formed into a flat shape. The positive electrode 20, the negative electrode 30, and the separator 32 are all long and belt-shaped components. The secondary battery 10 also includes a positive electrode current collector 25 connected to the positive electrode 20 and a negative electrode current collector 35 connected to the negative electrode 30. The electrode assembly may be a stacked electrode assembly in which a plurality of positive electrodes and a plurality of negative electrodes are alternately stacked on top of the other through the separator 32.

The electrolyte may be an aqueous electrolyte or a nonaqueous electrolyte. In the present embodiment, a nonaqueous electrolyte is used. The nonaqueous electrolyte includes a nonaqueous solvent and an electrolyte salt dissolved in the nonaqueous solvent. As the nonaqueous solvent, there may be used, for example, esters, ethers, nitriles, amides, and a mixed solvent or the like of two or more thereof. The nonaqueous solvent may include a halogen substitute obtained by substituting at least a part of hydrogen of the above solvent with halogen atoms such as fluorine. As the electrolyte salt, a lithium salt such as LiPF₆ or the like is used. The electrolyte solution may not be a liquid electrolyte, and may be a solid electrolyte for which a gel-like polymer or the like is used.

The secondary battery 10 includes a positive electrode terminal 12 which is electrically connected to the positive electrode 20 through the positive electrode current collector 25, and a negative electrode terminal 13 which is electrically connected to the negative electrode 30 through the negative electrode current collector 35. The secondary battery 10 also includes a sealing plate 15 that closes the opening of the outer can 14. The outer can 14 and the sealing plate 15 are made of a metal material that mainly contains, for example, aluminum.

In the present embodiment, the sealing plate 15 has an elongated rectangular shape, with the positive electrode terminal 12 located on one end side of the sealing plate 15 in the longitudinal direction and the negative electrode terminal 13 located on the other end side. The positive electrode terminal 12 and the negative electrode terminal 13 are external connection terminals connected to other secondary batteries 10 or loads, and are fixed to the sealing plate 15 through an insulating member. The sealing plate 15 usually includes a gas discharge valve 16 and an electrolyte injection portion 17.

The electrode assembly 11 includes a flat portion and a pair of curved portions. The electrode assembly 11 is housed in the outer can 14 in such a manner that the winding axis of the electrode assembly 11 is in the same direction as the lateral direction of the outer can 14 (direction in which the positive electrode terminal 12 and the negative electrode terminal 13 are disposed), and a width of the electrode assembly 11, in which the pair of curved portions is located, is in the same direction as the height direction of the secondary battery 10 (direction orthogonal to the lateral direction and the thickness direction of the outer can 14). As will be described in detail later, a core stacked portion 24 of the positive electrode 20 is formed at one end of the electrode assembly 11 in the axial direction, and a core stacked portion 34 of the negative electrode 30 is formed at the other end of the electrode assembly in the axial direction. The core stacked portions are each electrically connected to the corresponding external connection terminal through the current collector. An insulating electrode assembly holder (insulating sheet) may be placed between the electrode assembly 11 and an inner surface of the outer can 14.

The positive electrode 20 includes a positive electrode core 21 and a positive electrode mixture layer (not illustrated) formed on the surface of the positive electrode core 21 except for an exposure region 23 where a surface of the positive electrode core 21 is exposed. For the positive electrode core 21, there is used a metal foil made of, for example, aluminum which is stable in the potential range of the positive electrode 20 within the battery operating voltage range, or a film with such a metal disposed on the surface layer. The positive electrode mixture layer includes a positive electrode active material such as a lithium transition metal compound, a conductive material such as acetylene black, and a binder material such as polyvinylidene fluoride. The positive electrode mixture layer is formed on both sides of the positive electrode core 21.

The positive electrode 20 includes the exposure region 23 where the positive electrode mixture layer is not formed and the surface of the positive electrode core 21 is exposed. The exposure region 23 is formed like a belt at one end in the width direction of the positive electrode 20 along the length of the positive electrode 20. In addition, the exposure region 23 is formed on both sides of the positive electrode 20 with a substantially fixed width from one end of the positive electrode 20 in the width direction. The positive electrode 20 is wound so that the exposure regions 23 are placed at one end in the axial direction of the electrode assembly 11 and the exposure regions 23 overlap each other without the separator 32 interposed therebetween.

The negative electrode 30 includes a negative electrode core 31 and a negative electrode mixture layer (not illustrated) formed on the surface of the negative electrode core 31 except for an exposure region 33 where a surface of the negative electrode core 31 is exposed. The negative electrode mixture layer includes a negative electrode active material such as graphite or an Si-containing compound, and a binder material such as styrene-butadiene rubber (SBR). The negative electrode mixture layer is formed on both sides of the negative electrode core 31. A thickness of the negative electrode core 31 is, for example, from 5 µm to 10 µm, and preferably 8 µm or less (at least 5 µm).

The negative electrode core 31 is made of a copper foil having a surface roughness of 2.0 µm or less and a glossiness of from 50 to 350. The copper foil is mainly composed of Cu and may contain small amounts of metal elements other than Cu, such as Cr. The negative electrode core 31 needs to be composed of a material including copper foil having a surface roughness of 2.0 µm or less and a glossiness of from 50 to 350. By using the copper foil with the surface roughness of 2.0 µm or less and the glossiness of from 50 to 350 as the negative electrode core 31, a high-strength and low-resistance welded portion of the negative electrode core 31 and the negative electrode current collector 35 can be formed with a synergistic action of a projection 38 which will be described later.

The surface roughness of the negative electrode core 31 (copper foil) is preferably from 0 µm to 2.0 µm on both sides. A preferred example of the surface roughness of the negative electrode core 31 is from 0 µm to 1.60 µm, representing a surface with less irregularities. The surface roughness is determined by a measurement method specified in JIS B 0601 1994, and measured by a surface roughness measuring instrument (model SE1700 α manufactured by Kosaka Laboratory, Ltd.) using a noncontact method.

The glossiness of the negative electrode core 31 (copper foil) is preferably from 50 to 350 on both sides. A preferable example of the glossiness of the negative electrode core 31 is from 50 to 96. The glossiness is measured by a surface glossiness measuring instrument (micro-gloss series manufactured by BYK) at an incident angle of 60 degrees in accordance with a measurement method specified in JIS (Z8741).

The negative electrode 30 includes the exposure region 33 where the negative electrode mixture layer is not formed and the surface of the negative electrode core 31 is exposed. The exposure region 33 is formed like a belt at one end in the width direction of the negative electrode 30 along the length of the negative electrode 30. In addition, the exposure region 33 is formed on both sides of the negative electrode 30 with a substantially fixed width from one end of the negative electrode 30 in the width direction. The width of the exposure region 33 is, for example, at least 12 mm. The negative electrode 30 is wound so that the exposure regions 33 are placed at one end in the axial direction of the electrode assembly 11 and the exposure regions 33 overlap each other without any separator 32 being disposed therebetween.

The electrode assembly 11 includes the core stacked portion 24 formed by stacking a plurality of exposure regions 23 of the positive electrode 20, and the core stacked portion 34 formed by stacking a plurality of exposure regions 33 of the negative electrode 30. As described above, the exposure region 23 of the positive electrode 20 is formed at one end of the electrode assembly 11 in the axial direction, and the exposure region 33 of the negative electrode 30 is formed at the other end of the electrode assembly 11 in the axial direction. The positive electrode 20 and the negative electrode 30 are arranged so that the positive electrode mixture layer and the negative electrode mixture layer face each other through the separator 32, but the positive and negative electrodes are displaced from each other in the axial direction of the electrode assembly 11 so that the exposure region 23 of the positive electrode 20 does not face the negative electrode 30 and the exposure region 33 of the negative electrode 30 does not face the positive electrode 20.

The core stacked portions 24, 34 are each formed by stacking, for example, more than forty layers of the positive electrode core 21 and the negative electrode core 31, respectively. The number of the stacked layers of the core stacked portions 24, 34 depends on the number of turns of the positive electrode 20 and the negative electrode 30. As the number of turns of the positive electrode 20 and the negative electrode 30 increases, the number of stacked layers increases. Increased number of turns of the positive electrode 20 and the negative electrode 30 leads to higher capacity and output of the secondary battery 10. On the other hand, the increased number of stacked layers of the core in the core stacked portions 24, 34 often causes welding defects, such as generation of more voids at the interface with the current collectors, due to the varied surface condition of the core. In particular, the welding of the core stacked portion 34 made of a copper foil and the negative electrode current collector 35 becomes a problem.

In the following, the welded portion of the core stacked portion and the current collector will be described using the negative electrode 30 as an example. The same configuration can be applied to the welded portions of the core stacked portion 24 and the positive electrode current collector 25 of the positive electrode 20 as in the case of the negative electrode 30 described below. Alternatively, a conventionally known configuration may be applied to the welded portion of the core stacked portion 24 and the positive electrode current collector 25.

The negative electrode current collector 35 is composed of, for example, a metal mainly containing copper. The negative electrode current collector 35 preferably includes a first member 36 and a second member 37. The core stacked portion 34 is sandwiched between the first member 36 and the second member 37 from both sides in the thickness direction of the electrode assembly 11 and welded to the first member 36 and the second member 37. The core stacked portion 34 is compressed in the thickness direction of the electrode assembly 11, and the overlapping exposure regions 33 are brought into contact with each other.

The first member 36, which constitutes the negative electrode current collector 35, is welded to one side of the core stacked portion 34, extending to the sealing plate 15 side and is connected to the negative electrode terminal 13. The second member 37 is a rectangular-shaped plate member, and its end portion may be bent to the side opposite to the core stacked portion 34 from the viewpoint of, for example, preventing generation of spatters during welding. The second member 37 is welded to the other side of the core stacked portion 34 and not connected to other members. Therefore, the first member 36 is the member having the current collector function of electrically connecting the negative electrode terminal 13 to the negative electrode 30. The second member 37 is regarded as a receiving member to ensure excellent weldability of the core stacked portion 34 and the negative electrode current collector 35 by sandwiching the core stacked portion 34 with the first member 36.

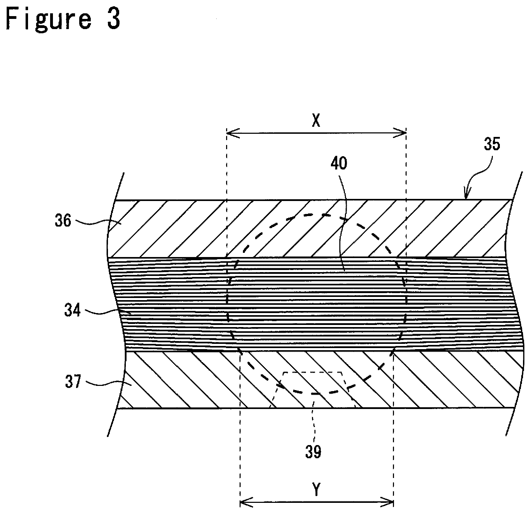

FIG. 3 is a sectional view of the welded portion and its vicinity between the core stacked portion 34 and the negative electrode current collector 35. As illustrated in FIG. 3, a nugget 40 is formed by welding at the welded portion of the core stacked portion 34 and the negative electrode current collector 35. The nugget 40 is a lump-like region where the negative electrode core 31, which forms the core stacked portion 34, and the negative electrode current collector 35 are melted. A large nugget 40 is formed at the welded portion of the core stacked portion 34 and the negative electrode current collector 35, with a maximum diameter (X) of preferably at least 1.6 mm. The nugget 40 is formed in a spherical shape, for example, with its center located at the center portion of the core stacked portion 34 in the thickness direction, although the diameter usually somewhat varies. The maximum diameter (X) of the nugget 40 refers to a maximum span of the diameter of the nugget 40.

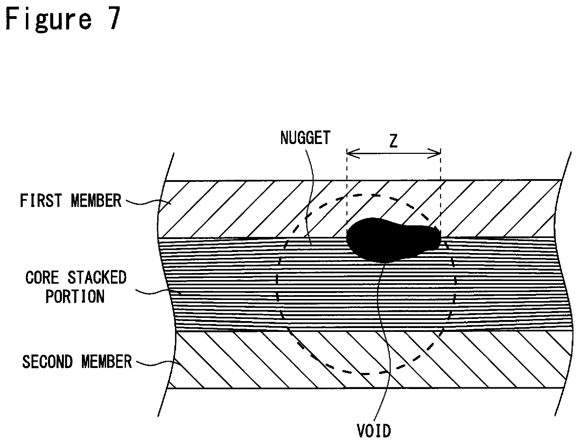

As described above, the core stacked portion 34 is sandwiched between the first member 36 and the second member 37 and welded from both sides, and includes the nugget 40 formed by welding. A contact length (Y) between the nugget 40 of the core stacked portion 34 and the first and second members 36 and 37, respectively, is preferably at least 1.0 mm. There is no void, like the one illustrated in FIG. 7 described later, having the length (maximum span length) of at least 1.0 mm at the interface between the core stacked portion 34 and the negative electrode current collector 35 (the first member 36 and the second member 37). This means that the core stacked portion 34 and the negative electrode current collector 35 are welded together at a high strength and a low resistance.

A ratio of the contact length (Y) between the nugget 40 and the negative electrode current collector 35 to the maximum diameter (X) of the nugget 40 (Y/X) is preferably at least 40%, more preferably at least 50%, and most preferably at least 60%. For example, assuming that maximum diameter (X) of the nugget 40 is the same, the contact length (Y) becomes longer and the Y/X becomes higher when less voids are present at the interface between the core stacked portion 34 and the negative electrode current collector 35.

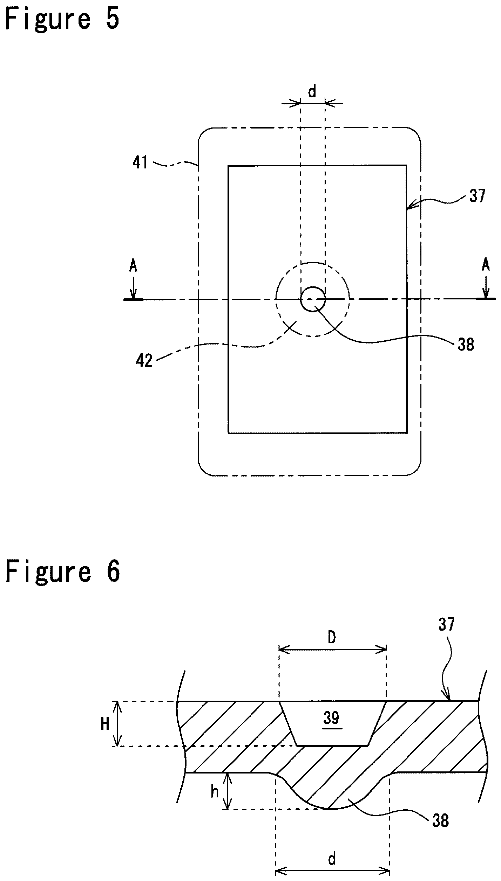

Although not illustrated in FIG. 3 (see FIG. 2 above FIG. 5 below), it is preferable to provide an insulating sheet 41 with a hole 42 having a diameter of from 4.1 mm to 4.3 mm between the core stacked portion 34 and the negative electrode current collector 35. Such a diameter leads to prevention of melting of the insulating sheet during resistance-welding.

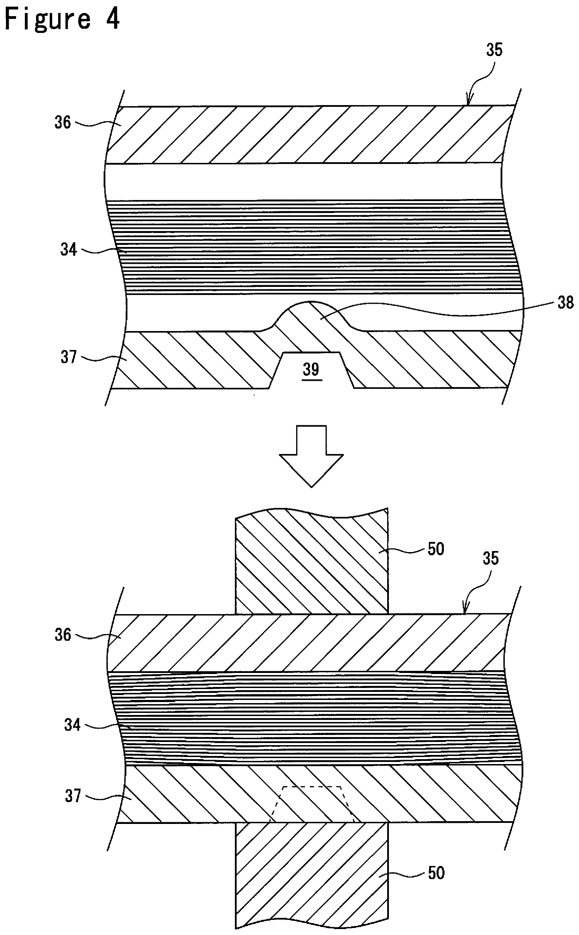

In the following, by referring to FIGS. 4 to 6, an example of a method for manufacturing the secondary battery 10 having the above configuration will be described in detail. FIG. 4 illustrates the welding process of the core stacked portion 34 and the negative electrode current collector 35, and FIGS. 5 and 6 illustrate the second member 37 constituting the negative electrode current collector 35 before being welded to the core stacked portion 34.

As illustrated in FIG. 4, in the manufacturing process of the secondary battery 10, a pair of electrode rods 50 is used to resistance-weld the core stacked portion 34 and the negative electrode current collector 35. The manufacturing process of the secondary battery 10 includes the following steps:
(1) forming a projection 38 on at least one of the first member 36 and the second member 37 constituting the negative electrode current collector 35, and
(2) in a state where the core stacked portion 34 is sandwiched between the first member 36 and the second member 37 from both sides, and the projection 38 is in contact with the core stacked portion 34, resistance-welding the core stacked portion 34 and the negative electrode current collector 35.

The manufacturing process of the secondary battery 10 further includes fabricating the positive electrode 20, fabricating the negative electrode 30, fabricating the electrode assembly 11, welding the current collector and the external connection terminal, and assembling the components of the secondary battery 10. The negative electrode 30 can be fabricated by coating both sides of the negative electrode core 31 made of, for example, a long copper foil with a negative electrode mixture slurry containing a negative electrode active material, a binder material, and the like, except for the belt-like exposure region 33 along the longitudinal direction, followed by drying and rolling the coated film to form the negative electrode mixture layer on both sides of the negative electrode core 31. The positive electrode 20 can also be fabricated in the same way as the negative electrode 30 using the mixture slurry.

The electrode assembly 11 is fabricated by spirally winding the positive electrode 20 and the negative electrode 30 through the separator 32 to form the core stacked portions 24, 34, followed by press-forming into a flat shape, thus fabricating the electrode assembly 11. It is also possible to fabricate the electrode assembly 11 by winding the positive electrode 20 and the negative electrode 30 in a flat shape. The positive electrode 20 and the negative electrode 30 are made to overlap each other through the separator 32 so that the exposure regions 23 and 33 are located on opposite sides, the exposure region 23 does not overlap the negative electrode 30 and the separator 32, and the exposure region 33 does not overlap the positive electrode 20 and the separator 32. After that, the positive electrode 20 and the negative electrode 30 are wound using a predetermined winding core to fabricate the electrode assembly 11.

In the example illustrated in FIGS. 4 to 6, the projection 38 is formed on the second member 37 that constitutes the negative electrode current collector 35. The projection 38 is a protruding portion that contacts the core stacked portion 34 and protrudes toward the core stacked portion 34 side. The projection 38 formed on the negative electrode current collector 35 enables concentration of current at the tip of the projection 38 during resistance-welding and decreases a reactive current, thus achieving efficient and excellent resistance-welding. The projection 38 may be formed only on the first member 36, or on both the first member 36 and the second member 37.

The surface of the negative electrode current collector 35 (first member 36 and second member 37) that contacts the core stacked portion 34 (hereinafter may be referred to as the "contact surface") is substantially flat except for the portion where the projection 38 is formed. For example, the thickness of the first member 36 is from 0.95 mm to 1.05 mm, and the thickness of the second member 37 is from 0.77 mm to 0.83 mm. As in the present embodiment, when the projection 38 is formed only on one of the two members sandwiching the core stacked portion 34, it is preferable to decrease the thickness of the second member 37 where the projection 38 is formed compared to the thickness of the first member 36 where the projection 38 is not formed. The difference in thickness stabilizes the overall thermal balance and in turn leads to stabilization of the welding.

In the present embodiment, the projection 38 having a height (h) of from 0.36 mm to 0.45 mm is formed on the contact surface of the second member 37. By controlling the height (h) of the projection 38 within the above range, the generation of the voids between the core stacked portion 34 and the negative electrode current collector 35 is largely suppressed compared to the case where the height (h) is outside the above range, so that a well-formed nugget 40 can be obtained.

The height (h) of the projection 38 is preferably from 0.37 mm to 0.44 mm, more preferably from 0.38 mm to 0.43 mm, and most preferably from 0.39 mm to 0.42 mm. The height (h) of the projection 38 refers to the length along the thickness direction of the negative electrode current collector 35 from the flat region of the contact surface of the negative electrode current collector 35 to the tip of the projection 38. The contact surface of the second member 37 is flat except for the region where the projection 38 is formed. The above range is set because, if the height of the projection 38 exceeds 0.45 mm, the electrode assembly 11 may tilt by the pressure applied prior to the resistance-welding, causing a change in contact resistance between the projection 38 and the core stacked portion 34.

The projection 38 may be formed in, for example, a substantially trapezoidal shape with a flat tip in a cross-sectional view, but is preferably formed in a rounded-hill shape. By forming the projection 38 in a rounded-hill shape, it is possible to increase the concentration of the current at the tip of the projection 38, enabling more efficient and better resistance-welding. A diameter (d) of the rounded-hill shaped projection 38 is preferably controlled in a range from 1.41 mm to 1.49 mm. By controlling the diameter (d) within this range, the generation of the voids is minimized compared to the case where the diameter (d) is outside the above range, so that the well-formed nugget 40 can be obtained.

A plurality of projections 38 may be formed on the contact surface of the second member 37, but it is preferable to form one projection on the second member 37 from the viewpoint of current concentration during resistance-welding. The projection 38 may be formed on each contact surface of the first member 36 and second member 37. The projection 38 may be formed on any part of the contact surface of the second member 37 on the condition that the above dimensions are satisfied and the welding operation is not interfered. When the projection 38 is formed on each of the first member 36 and the second member 37, the projections 38 are formed to face each other across the core stacked portion 34.

The projection 38 is formed, for example, by pressing the second member 37 from the surface opposite to the contact surface. A recess portion 39 is formed, therefore, in the second member 37 on the surface opposite to the projection 38 (contact surface) at a position where the projection 38 and the second member 37 overlap in the thickness direction. Although the projection 38 melts and collapses during the resistance-welding of the core stacked portion 34 and the negative electrode current collector 35, the shape of the recess portion 39 remains, so that the shape and dimensions of the projection 38 can be estimated from the shape and dimensions of the recess portion 39, the thickness of the second member 37, and the like.

A diameter (D) of the recess portion 39 is, for example, from 1.10 mm to 1.30 mm, and preferably from 1.15 mm to 1.25 mm. As illustrated in FIG. 6, the recess portion 39 is formed in a substantially trapezoidal shape in cross-sectional view, with the diameter decreasing toward the projection 38 side. In this case, the diameter (D) means the maximum diameter at the entrance of the recess portion 39. A depth (H) of the recess portion 39 is, for example, from 0.40 mm to 0.60 mm, and preferably from 0.45 mm to 0.55 mm. When the projection 38 is formed on the first member 36, the recess portion 39 is formed in the first member 36.

As described above, in the manufacturing process of the secondary battery 10, the resistance-welding of the core stacked portion 34 and the negative electrode current collector 35 is performed in a state where the core stacked portion 34 is sandwiched between the first and second members 36 and 37 and the projection 38 is pressed against the core stacked portion 34. At this time, the insulating sheet 41 is placed between the core stacked portion 34 and the first member 36, and the insulating sheet 41 is also placed between the core stacked portion 34 and the second member 37. In the resistance-welding, the pair of electrode rods 50 is used to pressurize the core stacked portion 34 and the negative electrode current collector 35 from both sides in the thickness direction, while applying an electric current to generate Joule heat, to melt the components and form the nugget 40.

The resistance-welding is performed preferably when the insulating sheet 41 with a hole 42 having a diameter of from 4.1 mm to 4.3 mm (see FIG. 5) is placed between the core stacked portion 34 and the negative electrode current collector 35. That is, the core stacked portion 34 and the negative electrode current collector 35 are resistance-welded through the hole 42 of the insulating sheet 41. By providing the insulating sheet 41, it is possible to suppress the scattering of conductive dust generated from spatters during resistance-welding. It is also possible to prevent the portions of the second member 37 other than the projection from contacting the core stacked portion 34. This process is performed when the projection 38 is placed in the hole 42 of the insulating sheet 41.

### EXAMPLES

The following examples further explains the present disclosure, but the present disclosure is not limited to these examples.

### <Example 1>

### [Fabrication of Positive Electrode]

A positive electrode mixture slurry was applied to both sides of a positive electrode core made of an aluminum foil having a width of 127 mm (coating width: 108 mm) to form a coating film, and the coating film was dried and compressed. The obtained positive electrode core with the coating film (positive electrode mixture layer) was cut to a specified electrode size to fabricate the positive electrode. The positive electrode included an exposure region where the positive electrode mixture slurry was not applied and the surface of the core was exposed. The exposure region was formed like a belt having a fixed width along the longitudinal direction of the positive electrode.

### [Fabrication of Negative Electrode]

A negative electrode mixture slurry was applied to both sides of a negative electrode core having a width of 130 mm and a thickness of 8 µm (coating width: 117 mm) to form a coating film, and the coating film was dried and compressed. The obtained negative electrode core with the coating film (negative electrode mixture layer) was cut to a specified electrode size to fabricate the negative electrode. In Example 1, a copper foil having a surface roughness of 1.9 µm and a glossiness of 340 was used as the negative electrode core. The negative electrode included an exposure region where the negative electrode mixture slurry was not coated and the surface of the core was expose. The exposure region was formed like a belt having a fixed width (13 mm) along the longitudinal direction of the negative electrode.

### [Fabrication of Electrode Assembly]

The fabricated negative electrode and positive electrode were placed on top of each other with a separator having a width of 119 mm interposed therebetween, and spirally wound to form a stack of separator A/negative electrode/separator B/positive electrode/separator A and so on in the radial direction of the spiral winding. After that, the obtained spiral winding was pressed in the radial direction (at temperature 25°C, press pressure 85 kN, and pressing time 5 s) to obtain a flat wound electrode assembly having a thickness of 15. 7 mm (average thickness of 30 units fabricated). At one end of the electrode assembly in the axial direction, there was formed the positive electrode core stacked portion in which the core exposure regions of the positive electrode were stacked. At the other end of the electrode assembly, there was formed the negative electrode core stacked portion in which the core exposure regions of the negative electrode were stacked. Eighty-four layers of the negative electrode core were stacked in the negative electrode core stacked portion.

### [Welding Process]

Next, the first member constituting the negative electrode current collector was crimped to the sealing body and connected to the negative electrode terminal. The negative electrode core stacked portion was compressed by the first member obtained above and the second member of the negative electrode current collector, and the stacked portion was resistance-welded with the negative electrode current collector. The first and second members were composed of copper, the first member having a thickness of 1.0 mm and the second member having a thickness of 0.8 mm. In Example 1, the second member of the negative electrode current collector was pressed to form the projection of a rounded-hill shape having a height (h) of 0.41 mm and a diameter (d) of 1.45 mm. On the surface of the second member opposite to the contact surface contacting the core stacked portion, a recess portion having a diameter (D) of 1.20 mm and a depth (H) of 0.5 mm was formed.

An insulating sheet having a thickness of 0.1 mm and including a hole having a diameter of 4.2 mm was placed between the negative electrode core and the first and second members. At this time, the insulating sheet was arranged so that the holes of the two insulating sheets overlap in the thickness direction of the core stacked portion, and the projection of the second member was located at the center of the holes.

After the first and second members of the negative electrode current collector were disposed on both sides of the negative electrode core stacked portion through the insulating sheet in the thickness direction, a pair of electrode rods was pressed against the first and second members to compress the stacked portion (welding pressure 1600 N) to perform the resistance-welding by applying an electric current by a two-stage energization method. The energization time was 2.3 ms for the first energization and 3 ms for the second energization.

### [Evaluating Welded Portion]

The welded portion of the negative electrode core stacked portion and the negative electrode current collector were evaluated according to the following procedures:
▪ Use cutting pliers to cut out the vicinity of the welded portion.
▪ Harden the cut-out sample piece with epoxy resin.
▪ Scrape the sample piece hardened with epoxy resin to the center of the nugget.
▪ Etch away unwanted portions to facilitate observation of the nugget.
▪ Observe the treated sample piece under an optical microscope.

The welded portion was observed by the above method, and the formation of a large nugget with a maximum diameter exceeding 1.6 mm was confirmed, although small voids were recognized at the interface between the core stacked portion and the current collector. There were no voids exceeding 1.0 mm in length at the interface between the core stacked portion and the current collector, and the contact length between the nugget and the current collector was at least 1.0 mm. Also, no melting of the insulating sheet was observed.

The strength (peel strength) of the welded portion was measured using Autograph manufactured by SHIMADZU CORPORATION, and the obtained peel strength was 626 N. In addition, the resistance of the negative electrode was measured using a resistance measuring instrument manufactured by HIOKI E.E. CORPORATION, and the obtained resistance value was 0.0056 mΩ. The following examples and comparative examples were evaluated in the same manner as in Example 1. The evaluation results are shown in Table 1.

### <Example 2>

The electrode assembly was fabricated in the same manner as in Example 1, except that a copper foil having a surface roughness of 1.6 µm and a glossiness of 96 was used as the negative electrode core. The negative body core stacked portion and the negative electrode current collector were resistance-welded, and the welded portion was evaluated.

### <Example 3>

The electrode assembly was fabricated in the same manner as in Example 1, except that the height (h) and the diameter (d) of the projection formed on the second member of the negative electrode current collector were 0.36 mm and 1.19 mm, respectively. The negative electrode core stacked portion and the negative electrode current collector were resistance-welded, and the welded portion was evaluated.

### <Comparative Example 1>

The electrode assembly was fabricated in the same manner as in Example 1, except that no projection was formed on the second member of the negative electrode current collector. The negative electrode core stacked portion and the negative electrode current collector were resistance-welded, and the welded portion was evaluated.

### <Comparative Example 2>

The electrode assembly was fabricated in the same manner as in Example 1, except that a copper foil having a surface roughness of 2.1 µm and a glossiness of 355 was used as the negative electrode core. The negative electrode core stacked portion and the negative electrode current collector were resistance-welded, and the welded portion was evaluated.

### <Comparative Example 3>

The electrode assembly was fabricated in the same manner as in Example 1, except that a copper foil having a surface roughness of 2.1 µm and a glossiness of 175 was used as the negative electrode core. The negative electrode core stacked portion and the negative electrode current collector were resistance-welded, and the welded portion was evaluated.

### <Comparative Example 4>

The electrode assembly was fabricated in the same manner as in Example 1, except that a copper foil having a surface roughness of 1.6 µm and a glossiness of 355 was used as the negative electrode core. The negative electrode core stacked portion and the negative electrode current collector were resistance-welded, and the welded portion was evaluated.

### <Comparative Example 5>

The electrode assembly was fabricated in the same manner as in Example 1, except that the height (h) and the diameter (d) of the projection formed on the second member of the negative electrode current collector were 0.28 mm and 1.11 mm, respectively. The negative electrode core stacked portion and the negative electrode current collector were resistance-welded, and the welded portion was evaluated.

**[Table 1]**

| | Negative Electrode Core | | Projection | Evaluation of Welded Portion | | | | |
|---|---|---|---|---|---|---|---|---|
| | Surface Roughness | Glossiness | Height | Maximum Diameter of Nugget | Void of At Least 1 mm | Contact Length | Peel Strength | Resistance |
| Example 1 | 1.9 µm | 340 | 0.41 mm | at least 1.6 mm | None | at least 1.00 mm | 626 N | 0.0056 mΩ |
| Example 2 | 1.6 µm | 96 | 0.41 mm | at least 1.6 mm | None | at least 1.00 mm | 820 N | 0.0045 mΩ |
| Example 3 | 1.9 µm | 340 | 0.36 mm | at least 1.6 mm | None | at least 1.00 mm | 535 N | 0.011 mΩ |
| Comparative Example 1 | 1.9 µm | 340 | N/A | Unwelded portion occurred | | | | |
| Comparative Example 2 | 2.1 µm | 355 | 0.41 mm | at least 1.6 mm | Present | 1.00 mm or less | 125 N | 0.027 mΩ |
| Comparative Example 3 | 2.1 µm | 175 | 0.41 mm | at least 1.6 mm | Present | 1.00 mm or less | 234 N | 0.023 mΩ |
| Comparative Example 4 | 1.6 µm | 355 | 0.41 mm | at least 1.6 mm | Present | 1.00 mm or less | 325 N | 0.033 mΩ |
| Comparative Example 5 | 1.9 µm | 340 | 0.28 mm | Unwelded portion occurred | | | | |

As shown in Table 1, the generation of voids in the welded portion of the negative electrode core stacked portion and the negative electrode current collector was substantially suppressed in the examples, and the welded portion with high peel strength and low resistance was obtained. In particular, in Example 2, no void was observed in the welded region, and a well-formed nugget was obtained.

On the other hand, in the comparative examples, as illustrated in FIG. 7, a void having a maximum effective length (Z) exceeding 1.0 mm was formed between the first member of the negative electrode current collector and the core stacked portion, and the frequency of occurrence of the unwelded portion has largely increased. In addition, melting of the insulating sheet occurred. In particular, in Comparative Example 1 using the second member with no projection, a large void was observed not only between the first member and the core stacked portion, but also between the second member and the core stacked portion.

### REFERENCE SIGNS LIST

10 Secondary battery
11 Electrode assembly
12 Positive electrode terminal
13 Negative electrode terminal
14 Outer can
15 Sealing plate
16 Gas discharge valve
17 Electrolyte injection portion
20 Positive electrode
21 Positive electrode core
23, 33 Exposure region
24, 34 Core stacked portion
25 Positive electrode current collector
30 Negative electrode
31 Negative electrode core
32 Separator
35 Negative electrode current collector
36 First member
37 Second member
38 Projection
39 Recess portion
40 Nugget
41 Insulating sheet
42 Hole
50 Electrode rod

## Claims

1. A method for manufacturing a secondary battery (10) including an electrode assembly (11) and a negative electrode current collector (35), the electrode assembly (11) including a positive electrode (20), a negative electrode (30), and a separator (32), and formed by stacking the positive electrode (20) and the negative electrode (30) with the separator (32) interposed therebetween,
the negative electrode (30) including a negative electrode core (31) made of a copper foil having a surface roughness of 2.0 µm or less and a glossiness of from 50 to 350, and a negative electrode mixture layer formed on a surface of the negative electrode core (31) except for an exposure region (33) where a surface of the negative electrode core (31) is exposed, when the surface roughness and glossiness are measured according to JIS B 0601 1994 and JIS (Z8741), respectively, as indicated in the description,
the electrode assembly (11) including a core stacked portion (34) formed by stacking a plurality of the exposure regions (33) of the negative electrode (30),
the negative electrode current collector (35) including a projection (38) having a height of from 0.36 mm to 0.45 mm on at least one of a first member (36) and a second member (37) constituting the negative electrode current collector (35),
the method for manufacturing the secondary battery (10), comprising:
resistance-welding the negative electrode current collector (35) and the core stacked portion (34) in a state where the core stacked portion (34) is sandwiched between the first member (36) and the second member (37) from both sides and the projection (38) is in contact with the core stacked portion (34).

2. The method for manufacturing the secondary battery (10) according to claim 1, wherein
the core stacked portion (34) is formed by stacking at least forty layers of the negative electrode core (31).

3. The method for manufacturing the secondary battery (10) according to claim 1 or 2, wherein
the projection (38) is formed in a rounded-hill shape having a diameter of from 1.41 mm to 1.49 mm.

4. The method for manufacturing the secondary battery (10) according to any one of claims 1 to 3, wherein
a recess portion having a diameter of from 1.10 mm to 1.30 mm is formed on at least one of the first member (36) and the second member (37) at a position overlapping the projection (38) on a surface opposite to a surface on which the projection (38) is formed.

5. The method for manufacturing the secondary battery (10) according to any one of claims 1 to 4, further comprising:
disposing an insulating sheet (41) including a hole (42) having a diameter of from 4.1 mm to 4.3 mm between the core stacked portion (34) and the negative electrode current collector (35); and
resistance-welding the core stacked portion (34) and the negative electrode current collector (35) through the hole (42) of the insulating sheet (41).

6. A secondary battery (10) including an electrode assembly (11) and a negative electrode current collector (35), the electrode assembly (11) including a positive electrode (20), a negative electrode (30), and a separator (32), and formed by stacking the positive electrode (20) and the negative electrode (30) with the separator (32) interposed therebetween, wherein
the negative electrode (30) includes a negative electrode core (31) made of a copper foil having a surface roughness of 2.0 µm or less and a glossiness of from 50 to 350, and a negative electrode mixture layer formed on a surface of the negative electrode core (31) except for an exposure region (33) where a surface of the negative electrode core (31) is exposed, when the surface roughness and glossiness are measured according to JIS B 0601 1994 and JIS (Z8741), respectively, as indicated in the description,
the electrode assembly (11) includes a core stacked portion (34) formed by stacking a plurality of the exposure regions (33) of the negative electrode (30),
the core stacked portion (34) is sandwiched between a first member (36) and a second member (37), which constitute the negative electrode current collector (35), from both sides, and welded with the first member (36) and the second member (37) to obtain a nugget (40) formed by the welding, and
no void having a length of at least 1.0 mm is present at an interface between the core stacked portion (34) and the negative electrode current collector (35), while a maximum diameter of the nugget (40) is at least 1.6 mm.

7. The secondary battery (10) according to claim 6, wherein
a ratio of a contact length between the negative electrode current collector (35) and the nugget (40) relative to the maximum length of the nugget (40) is at least 40%.

## Patentansprüche

1. Verfahren zur Herstellung einer Sekundärbatterie (10), einschließend eine Elektrodenanordnung (11) und einen Stromsammler (35) einer negativen Elektrode, wobei die Elektrodenanordnung (11) eine positive Elektrode (20), eine negative Elektrode (30) und einen Separator (32) einschließt und durch Stapeln der positiven Elektrode (20) und der negativen Elektrode (30) mit dem Separator (32) dazwischen eingeschoben gebildet wird,
wobei die negative Elektrode (30) einen Kern (31) der negativen Elektrode, der aus einer Kupferfolie mit einer Oberflächenrauheit von 2,0 µm oder weniger und einem Glanz von 50 bis 350 hergestellt ist, und eine Mischlage der negativen Elektrode, die auf einer Oberfläche des Kerns (31) der negativen Elektrode mit Ausnahme einer Freilegeregion (33), in der eine Oberfläche des Kerns (31) der negativen Elektrode freigelegt ist, gebildet wird, einschließt, wenn die Oberflächenrauheit und der Glanz gemäß JIS B 0601 1994 bzw. JIS (Z8741) gemessen werden, wie in der Beschreibung angegeben,
wobei die Elektrodenanordnung (11) einen gestapelten Kernabschnitt (34) einschließt, der durch Stapeln einer Vielzahl der Freilegeregionen (33) der negativen Elektrode (30) gebildet wird,
wobei der Stromsammler (35) der negativen Elektrode einen Vorsprung (38) mit einer Höhe von 0,36 mm bis 0,45 mm auf mindestens einem von einem ersten Element (36) und einem zweiten Element (37), die den Stromsammler (35) der negativen Elektrode bilden, einschließt,
wobei das Verfahren zur Herstellung der Sekundärbatterie (10) umfasst:
Widerstandsschweißen des Stromsammlers (35) der negativen Elektrode und des gestapelten Kernabschnitts (34) in einem Zustand, in dem der gestapelte Kernabschnitt (34) zwischen dem ersten Element (36) und dem zweiten Element (37) von beiden Seiten eingeklemmt ist und der Vorsprung (38) in Kontakt mit dem gestapelten Kernabschnitt (34) ist.

2. Verfahren zur Herstellung der Sekundärbatterie (10) nach Anspruch 1, wobei
der gestapelte Kernabschnitt (34) durch Stapeln von mindestens vierzig Lagen des Kerns (31) der negativen Elektrode gebildet wird.

3. Verfahren zur Herstellung der Sekundärbatterie (10) nach Anspruch 1 oder 2, wobei
der Vorsprung (38) in einer Form eines abgerundeten Hügels mit einem Durchmesser von 1,41 mm bis 1,49 mm gebildet wird.

4. Verfahren zur Herstellung der Sekundärbatterie (10) nach einem der Ansprüche 1 bis 3, wobei
ein Aussparungsabschnitt mit einem Durchmesser von 1,10 mm bis 1,30 mm auf mindestens einem von dem ersten Element (36) und dem zweiten Element (37) an einer Position, die den Vorsprung (38) überlappt, auf einer Oberfläche gebildet wird, die entgegengesetzt zu einer Oberfläche ist, auf der der Vorsprung (38) gebildet wird.

5. Verfahren zur Herstellung der Sekundärbatterie (10) nach einem der Ansprüche 1 bis 4, ferner umfassend:
Anordnen einer isolierenden Platte (41), einschließend ein Loch (42) mit einem Durchmesser von 4,1 mm bis 4,3 mm, zwischen dem gestapelten Kernabschnitt (34) und dem Stromsammler (35) der negativen Elektrode; und
Widerstandsschweißen des gestapelten Kernabschnitts (34) und des Stromsammlers (35) der negativen Elektrode durch das Loch (42) der isolierenden Platte (41).

6. Sekundärbatterie (10), einschließend eine Elektrodenanordnung (11) und einen Stromsammler (35) einer negativen Elektrode, wobei die Elektrodenanordnung (11) eine positive Elektrode (20), eine negative Elektrode (30) und einen Separator (32) einschließt und durch Stapeln der positiven Elektrode (20) und der negativen Elektrode (30) mit dem Separator (32) dazwischen eingeschoben gebildet wird, wobei
die negative Elektrode (30) einen Kern (31) der negativen Elektrode, der aus einer Kupferfolie mit einer Oberflächenrauheit von 2,0 µm oder weniger und einem Glanz von 50 bis 350 hergestellt ist, und eine Mischlage der negativen Elektrode, die auf einer Oberfläche des Kerns (31) der negativen Elektrode mit Ausnahme einer Freilegeregion (33), in der eine Oberfläche des Kerns (31) der negativen Elektrode freigelegt ist, gebildet wird, einschließt, wenn die Oberflächenrauheit und der Glanz gemäß JIS B 0601 1994 bzw. JIS (Z8741) gemessen werden, wie in der Beschreibung angegeben,
die Elektrodenanordnung (11) einen gestapelten Kernabschnitt (34) einschließt, der durch Stapeln einer Vielzahl der Freilegeregionen (33) der negativen Elektrode (30) gebildet wird,
der gestapelte Kernabschnitt (34) zwischen einem ersten Element (36) und einem zweiten Element (37), die den Stromsammler (35) der negativen Elektrode bilden, von beiden Seiten eingeklemmt ist und mit dem ersten Element (36) und dem zweiten Element (37) verschweißt ist, um einen Schweißkern (40) zu erhalten, der durch das Schweißen gebildet wird, und
keine Leerstelle mit einer Länge von mindestens 1,0 mm an einer Grenzfläche zwischen dem gestapelten Kernabschnitt (34) und dem Stromsammler (35) der negativen Elektrode vorliegt, während ein maximaler Durchmesser des Schweißkerns (40) mindestens 1,6 mm beträgt.

7. Sekundärbatterie (10) nach Anspruch 6, wobei
ein Verhältnis einer Kontaktlänge zwischen dem Stromsammler (35) der negativen Elektrode und dem Schweißkern (40) in Bezug auf die maximale Länge des Schweißkerns (40) mindestens 40% beträgt.

## Revendications

1. Procédé pour fabriquer une batterie rechargeable (10) incluant un assemblage d'électrodes (11) et un collecteur de courant d'électrode négative (35), l'assemblage d'électrodes (11) incluant une électrode positive (20), une électrode négative (30), et un séparateur (32), et étant formé par empilement de l'électrode positive (20) et de l'électrode négative (30) avec le séparateur (32) interposé entre elles,
l'électrode négative (30) incluant un support d'électrode négative (31) faite d'une feuille de cuivre ayant une rugosité de surface de 2,0 µm ou moins et un brillant de 50 à 350, et une couche de mélange d'électrode négative formée sur une surface du support d'électrode négative (31) à l'exception d'une région d'exposition (33) où la surface du support d'électrode négative (31) est exposée, quand la rugosité de surface et le brillant sont mesurés conformément aux normes JIS B 0601 1994 et JIS (Z8741), respectivement, comme indiqué dans la description,
l'assemblage d'électrodes (11) incluant une portion empilée de support (34) formée par empilement d'une pluralité des régions d'exposition (33) de l'électrode négative (30),
le collecteur de courant d'électrode négative (35) incluant une saillie (38) ayant une hauteur de 0,36 mm à 0,45 mm sur au moins l'un parmi un premier élément (36) et un deuxième élément (37) constituant le collecteur de courant d'électrode négative (35),
le procédé de fabrication de la batterie rechargeable (10) comprenant :
un soudage par résistance du collecteur de courant d'électrode négative (35) et de la portion empilée de support (34) dans un état où la portion empilée de support (34) est prise en sandwich entre le premier élément (36) et le deuxième élément (37) depuis les deux côtés et la saillie (38) est en contact avec la portion empilée de support (34).

2. Procédé pour fabriquer une batterie rechargeable (10) selon la revendication 1, dans lequel la portion empilée de support (34) est formée par empilement d'au moins quarante couches du support d'électrode négative (31).

3. Procédé pour fabriquer une batterie rechargeable (10) selon la revendication 1 ou 2, dans lequel la saillie (38) est formée sous une forme de colline arrondie ayant un diamètre de 1,41 mm à 1,49 mm.

4. Procédé pour fabriquer une batterie rechargeable (10) selon l'une quelconque des revendications 1 à 3, dans lequel une portion en creux ayant un diamètre de 1,10 mm à 1,30 mm est formée sur au moins l'un parmi le premier élément (36) et le deuxième élément (37) à une position recouvrant la saillie (38) sur une surface opposée à la surface sur laquelle la saillie (38) est formée.

5. Procédé pour fabriquer une batterie rechargeable (10) selon l'une quelconque des revendications 1 à 4, comprenant en outre :
la disposition d'une feuille isolante (41) incluant un trou (42) ayant un diamètre de 4,1 mm à 4,3 mm entre la portion empilée de support (34) et le collecteur de courant d'électrode négative (35) ; et
le soudage par résistance de la portion empilée de support (34) et du collecteur de courant d'électrode négative (35) à travers le trou (42) de la feuille isolante (41).

6. Batterie rechargeable (10) incluant un assemblage d'électrodes (11) et un collecteur de courant d'électrode négative (35), l'assemblage d'électrodes (11) incluant une électrode positive (20), une électrode négative (30), et un séparateur (32), et étant formé par empilement de l'électrode positive (20) et de l'électrode négative (30) avec le séparateur (32) interposé entre elles, dans laquelle
l'électrode négative (30) inclut un support d'électrode négative (31) faite d'une feuille de cuivre ayant une rugosité de surface de 2,0 µm ou moins et un brillant de 50 à 350, et une couche de mélange d'électrode négative formée sur une surface du support d'électrode négative (31) à l'exception d'une région d'exposition (33) où la surface du support d'électrode négative (31) est exposée, quand la rugosité de surface et le brillant sont mesurés conformément aux normes JIS B 0601 1994 et JIS (Z8741), respectivement, comme indiqué dans la description,
l'assemblage d'électrodes (11) inclut une portion empilée de support (34) formée par empilement d'une pluralité des régions d'exposition (33) de l'électrode négative (30),
la portion empilée de support (34) est prise en sandwich entre un premier élément (36) et un deuxième élément (37) qui constituent le collecteur de courant d'électrode négative (35), depuis les deux côtés, et est soudée avec le premier élément (36) et le deuxième élément (37) pour que soit obtenu un noyau (40) formé par la soudure, et
aucun vide ayant une longueur d'au moins 1,0 mm n'est présent au niveau d'une interface entre la portion empilée de support (34) et le collecteur de courant d'électrode négative (35), tandis que le diamètre maximal du noyau (40) est d'au moins 1,6 mm.

7. Batterie rechargeable (10) selon la revendication 6, dans lequel le rapport de la longueur de contact entre le collecteur de courant d'électrode négative (35) et le noyau (40) à la longueur maximale du noyau (40) est d'au moins 40 %.
